# EUROPÄISCHE PATENTANMELDUNG

(11) **EP 1 288 422 A1**
(43) Veröffentlichungstag der Anmeldung: **05.03.2003**
(21) Anmeldenummer: 02018630.0
(22) Anmeldetag: 20.08.2002
(51) Int. Cl.: E05F 15/20, E05F 15/14, H02K 7/102, H02K 7/108

(54) **Öffnungssicherung für ein automatisches Schiebetürsystem**

(30) Priorität: 28.08.2001 DE 10141313
(71) Anmelder: DORMA GmbH + Co. KG, 58256 Ennepetal (DE)
(72) Erfinder: Wegner, Frank, 58339 Breckerfeld (DE)

(57) **Zusammenfassung**

Die vorliegende Erfindung betrifft eine Öffnungssicherung (1) für ein automatisches Schiebetürsystem (2) mit einem mittels Antrieb (5) angetriebenen Riemen (4) und mit zumindest einem am Riemen (4) gehaltenen Türflügel (6, 7), der zwischen einer geschlossenen und einer offenen Stellung verfahrbar ist. Erfindungsgemäß ist eine Kupplung (10) vorgesehen, die eine Bewegung des Riemens (4) in der geschlossenen Stellung des Türflügels (6, 7) verhindert.

## Beschreibung

Die vorliegende Erfindung betrifft eine Öffnungssicherung für ein automatisches Schiebetürsystem mit einem mittels Antrieb angetriebenen Riemen und mit zumindest einem am Riemen gehaltenen Türflügel, der zwischen einer geschlossenen und einer offenen Stellung verfahrbar ist.

In vielen Gebäuden werden Schiebetüren eingesetzt, die zum Einbau in Flucht- und Rettungswege zugelassen sind. Die Schiebetüren erfüllen hierbei den Zweck, in jeder Situation sicher zu öffnen und den im Gebäude befindlichen Personen jederzeit eine Flucht im Gefahrenfall zu ermöglichen.

Türen dieser Bauart werden insbesondere auch auf Flughäfen oder in Banken eingesetzt, wobei hierbei eine Trennung zwischen Schiebetürsystemen für öffentliche Bereiche, also innerhalb von Gebäuden und Schiebetürsystemen für Sicherheitsbereiche, d. h., als Übergang zwischen Gebäudeinnen- und -außenraum, erfolgt. Die Schiebetürsysteme sollen also ermöglichen, dass Personen im Gefahrenfall sicher flüchten können, jedoch die Türen nicht manuell geöffnet werden können, sofern sie nicht freigeschaltet sind. Hierbei erfolgt die Freischaltung üblicherweise über ein Gebäudeleitsystem oder ein an der Tür angebrachtes SRT-Türterminal.

Bisher werden Öffnungssicherungen für automatische Schiebetüren eingesetzt, die aus einem an der Schiebetür befestigten Stift sowie einer in den Türrahmen eingebrachten Bohrung bestehen. Zur Sperrung der Schiebetür wird hierbei lediglich der Stift vertikal in die Bohrung eingeführt, so dass eine Verfahrbarkeit der Tür unterbunden wird.

Alternativ ist auch eine Magnetlösung erhältlich, d. h., ein Haftmagnet wird am Türrahmen angebracht und wirkt in der geschlossenen Position der Schiebetür mit einer am Türflügel befestigten Gegenplatte zusammen.

Die beiden bekannten Öffnungssicherungen haben aber den Nachteil, dass sie aufwendig montiert werden müssen, d. h., die Haftmagneten lassen sich nur schwierig im Antrieb befestigen, da sie normalerweise nur an Drehflügeltüren eingesetzt werden. Die Stiftbohrungskombination hat neben der aufwendigen Montage auch den Nachteil, dass unbefugte Personen eine Versperrung der Schiebetür bewirken können, wodurch sich insbesondere in einem Notfall eine Potenzierung der Notsituation ergeben kann.

Es ist daher Aufgabe der vorliegenden Erfindung, eine Öffnungssicherung für ein automatisches Schiebetürsystem bereitzustellen, welche bei einfachem Aufbau und einfacher, kostengünstiger Herstellbarkeit eine einfache Montage ermöglicht und gleichzeitig eine Bedienung durch unberechtigte Personen vermeidet. Ferner soll diese Öffnungssicherung nachträglich bei bestehenden Schiebetürsystemen montiert werden können.

Diese Aufgabe wird durch eine Öffnungssicherung für ein automatisches Schiebetürsystem mit den Merkmalen des Patentanspruches 1 gelöst. Vorteilhafte Weiterbildungen sind Gegenstand der Unteransprüche.

Die erfindungsgemäße Öffnungssicherung für ein automatisches Schiebetürsystem zeichnet sich dadurch aus, dass eine Sperrvorrichtung vorgesehen wird, die eine Bewegung des einen Türflügel tragenden Riemens in die geschlossene Stellung des Türflügels verhindert, die im Bereich der Antriebskomponenten vorzugsweise untergebracht ist. Dabei kann es sich z. B. um eine Kupplung handeln, die nicht mit einer bekannten Kupplung zwischen Antriebsmotor und Riementrieb gleichzusetzen ist. Derartige Kupplungen sind am Markt einfach und kostengünstig erhältlich. Zudem können derartige Kupplungen in einfacher Form in bestehende Schiebetürsysteme integriert werden, ohne dass aufwendige Montageschritte erforderlich sind. Schließlich zeichnet sich die erfindungsgemäße Lösung dadurch aus, dass derartige gut funktionierende Öffnungssicherungen in einfacher Form in bestehende Schiebetürsysteme nachgerüstet werden können. Auch ist ersichtlich, dass derartige Kupplungen nicht durch unbefugte Personen betätigt werden können, sondern ausschließlich von befugten Personen ansteuerbar sind.

Vorzugsweise ist die Kupplung als Magnetkupplung ausgebildet, so dass sich auf dem Markt bewährte Komponenten verwendet werden können, die insbesondere auch zu einer kostengünstigen Lösung beitragen.

Die Magnetkupplung weist hierbei eine Ankerplatte auf, die im bestromten Zustand der Magnetkupplung mit einer den Riemen führenden Riemenscheibe zusammenwirkt und hierdurch den Riemen gegen eine Bewegung sichert, wenn der Antriebsmotor ausgeschaltet ist. Dieses einfache, aber dennoch wirkungsvolle Zusammenwirken zwischen Ankerplatte und Riemenscheibe führt zu einer äußerst wirkungsvollen Funktionsweise der erfindungsgemäßen Öffnungssicherung, ermöglicht aber gleichzeitig den Einsatz bekannter und einfach herstellbarer Bauteile.

Um ein sicheres Lösen zwischen Ankerplatte und Riemenscheibe im unbestromten Zustand der Magnetkupplung zu erzielen, so dass der Türflügel einfach in die offene Stellung verfahrbar ist, wird zwischen Ankerplatte und Riemenscheibe eine Feder vorzugsweise angeordnet.

Als Riemen wird bevorzugter Weise ein Endlos-Zahnriemen eingesetzt, der zwischen dem Antrieb und einer Umlenkrolle umläuft. Hierdurch wird ein einfacher, aber dennoch funktionssicherer Aufbau des automatischen Schiebetürsystemes erreicht.

Als Antrieb wird vorzugsweise ein Motor eingesetzt, der je nach erforderlicher Leistung aus der Vielzahl der bekannten und kostengünstig erhältlichen Motoren auswählbar und einsetzbar ist.

Als besonders bevorzugt hat sich herauskristallisiert, die Magnetkupplung der Antriebsrolle und/oder der Umlenkrolle zuzuordnen, da hierdurch die erfindungsgemäße Öffnungssicherung in den bereits vorhandenen Kämpfer integriert oder nachgerüstet werden kann, wodurch sich keine optische Beeinträchtigung des Schiebetürsystemes ergibt. Gleichzeitig ist aber die Magnetkupplung vor einem Zugriff durch unbefugte Personen gesichert.

Für eine einfache Montage weist die Magnetkupplung vorzugsweise einen Befestigungshalter auf, der üblicherweise an die bestehenden Kämpferprofile angepasst ist, d. h. eine einfache Montage an diesen Komponenten ermöglicht.

Nachfolgend wird die Erfindung anhand eines schematisch dargestellten Ausführungsbeispieles erläutert. Es zeigt:
- Figur 1:: Eine schematische Seitenansicht einer erfindungsgemäßen Öffnungssicherung, welche einer Umlenkrolle zugeordnet ist,
- Figur 2:: eine schematische Seitensansicht einer erfindungsgemäßen Öffnungssicherung, welche einer Antriebsrolle zugeordnet ist und
- Figur 3:: eine schematische Schnittansicht einer Magnetkupplung.

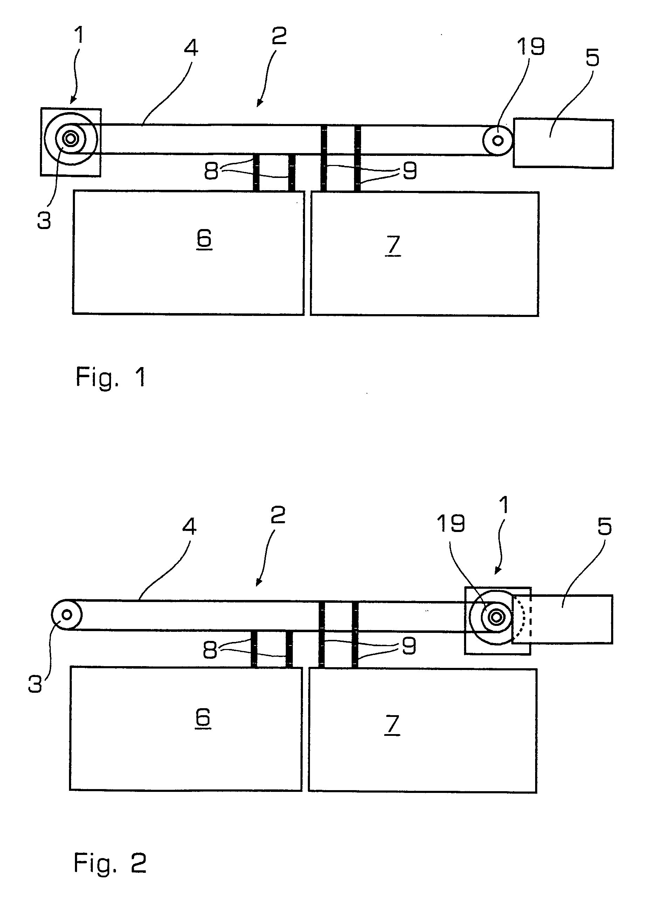

Nachfolgend wird unter Bezugnahme auf die Figuren 1 bis 3 ein Ausführungsbeispiel einer erfindungsgemäßen Öffnungssicherung 1 für ein automatisches Schiebetürsystem 2 beschrieben.

Wie in Figur 1 gezeigt, ist die erfindungsgemäße Öffnungssicherung 1 für ein automatisches Schiebetürsystem 2 an einer Umlenkrolle 3 montiert. Die Umlenkrolle 3 führt einen Endlos-Zahnriemen 4, welcher durch einen Antrieb 5 in Form eines Motors angetrieben wird. An dem Zahnriemen 4 sind zwei Türflügel 6 und 7 über Halter mit Laufwagen 8 und 9 befestigt und werden je nach Antriebsrichtung des Motors entweder in die geschlossene Stellung, wie in Figur 1 gezeigt, oder in eine geöffnete Stellung, die hier nicht gezeigt ist, verfahren.

Alternativ zu der Anordnung der Öffnungssicherung 1 an der Umlenkrolle 3 kann die Öffnungssicherung 1, wie in Figur 2 dargestellt, auch einer Antriebsrolle 19 zugeordnet werden, die von dem Motor 5 angetrieben wird.

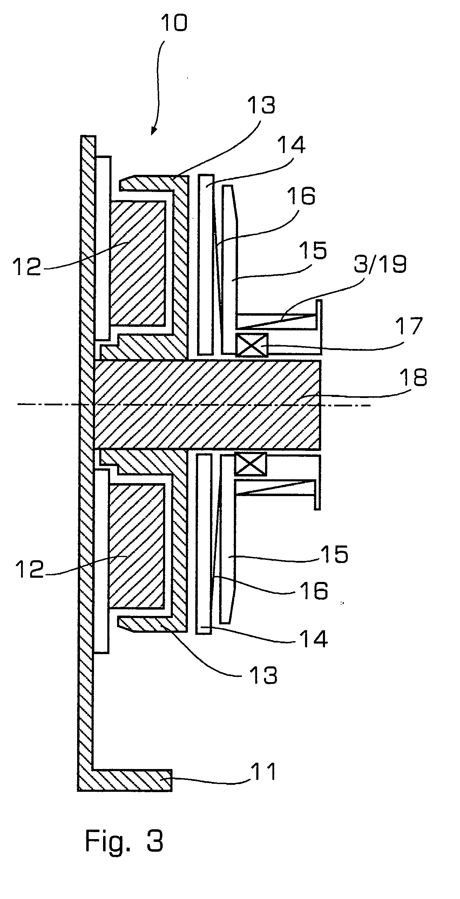

Die Öffnungssicherung 1 besteht gemäß Figur 3 aus einer Magnetkupplung 10, die bei Bestromung eine Bewegung der Türflügel 6, 7 in ihre geöffnete Stellung, entweder durch das Zusammenwirken mit der Umlenkrolle 3 gemäß Figur 1 oder durch das Zusammenwirken mit der Antriebsrolle 19 gemäß Figur 2 sichert.

Wie in Figur 3 dargestellt, weist die Magnetkupplung 10 einen Halter 11 auf, mittels welchem die Magnetkupplung 10 entweder an der Umlenkrolle 3 oder der Antriebsrolle 19 befestigt wird. Dieser Halter 11 sollte derart ausgebildet sein, dass er eine einfache Montage an der Umlenkrolle 3 bzw. der Antriebsrolle 19 ermöglicht bzw. in einfacher Form in einem nicht dargestellten Kämpfer befestigbar ist.

Ferner umfasst die Magnetkupplung 10 einen Elektromagneten 12 mit zugeordnetem Rotor 13 und in der Darstellung der Figur 3 vorgelagerter Ankerplatte 14. Zur Ankerplatte 14 ist im Abstand eine Scheibe 15 angeordnet sowie zwischen Ankerplatte 14 und Scheibe 15 eine Feder 16 positioniert. Die Scheibe 15 ist mittels eines Lagers 17 auf einer Welle 18 in üblicher Form gelagert und mit der Antriebsrolle 19 und/oder der Umlenkrolle 3 kraft- und formschlüssig verbunden.

In Figur 3 befindet sich die Magnetkupplung 10 im unbestromten Zustand. Wird nunmehr die Magnetkupplung 10 bestromt, wird auf Grund der magnetischen Anziehungskraft der Spalt zwischen Ankerplatte 14 und dem Rotor 13 entgegen der Federkraft der Feder 16 geschlossen, d. h., die Ankerplatte 14 und der Rotor 13 kommen direkt aufeinander zur Anlage. Hierdurch wird eine weitere Rotation der Riemenscheibe 15 verhindert, demzufolge führt auch der Zahnriemen 4 keine Bewegung mehr aus und die Türflügel 6 und 7 verbleiben in ihrer derzeitigen geschlossenen Position. Sobald die Stromzufuhr zum Elektromagneten 12 beendet wird, löst sich der Rotor 13 von der Ankerplatte 14 auf Grund der Federkraft der Feder 16 und ist wieder frei drehbeweglich, so dass auf Grund des Motors 5 eine Bewegung des Zahnriemens 4 und demgemäß der Türflügel 6 und 7 initiiert werden kann.

Bei der erfindungsgemäßen Öffnungssicherung 1, insbesondere der Magnetkupplung 10, hat es sich als vorteilhaft herausgestellt, dass der Einbau der Magnetkupplung 10 in den Antrieb 5 relativ einfach ist und auf eine Vielzahl bereits vorhandener Komponenten zurückgegriffen werden kann. Zudem kann eine derartige Magnetkupplung 10 auch in bestehende automatische Schiebetürsysteme nachgerüstet werden.

Die vorhergehende Beschreibung des Ausführungsbeispieles gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Öffnungssicherung
- 2: Kleinautomatisches Schiebetürsystem
- 3: Umlenkrolle
- 4: Endlos-Zahnriemen
- 5: Antrieb
- 6: Türflügel
- 7: Türflügel
- 8: Befestigungshalterung
- 9: Befestigungshalterung
- 10: Magnetkupplung
- 11: Halter
- 12: Elektromagnet
- 13: Rotor
- 14: Ankerplatte
- 15: Scheibe
- 16: Feder
- 17: Lager
- 18: Welle
- 19: Antriebsrolle

## Patentansprüche

1. Öffnungssicherung (1) für ein automatisches Schiebetürsystem (2)
- mit einem mittels Antrieb (5) angetriebenen Riemen (4), und
- mit zumindest einem am Riemen (4) gehaltenen Türflügel (6, 7), der zwischen einer geschlossenen und einer offenen Stellung verfahrbar ist,
**dadurch gekennzeichnet,**
- **dass** eine Kupplung (10) vorgesehen ist, die eine Bewegung des Riemens (4) in der geschlossenen Stellung des Türflügels (6, 7) verhindert.

2. Öffnungssicherung nach Anspruch 1, **dadurch gekennzeichnet, dass** die Kupplung (10) als schaltbare Magnetkupplung ausgebildet ist.

3. Öffnungssicherung nach Anspruch 2, **dadurch gekennzeichnet, dass** die Magnetkupplung (10) eine Ankerplatte (14) aufweist, die im bestromten Zustand der Magnetkupplung (10) mit einem den Riemen (4) führenden Rotor (13) zusammenwirkt und hierdurch den Riemen (4) gegen eine Bewegung sichert.

4. Öffnungssicherung nach Anspruch 3, **dadurch gekennzeichnet, dass** zwischen Ankerplatte (14) und einer Scheibe (15) eine Feder (16) angeordnet ist.

5. Öffnungssicherung nach einem der Ansprüche 1 bis 4, **dadurch gekennzeichnet, dass** der Riemen (4) ein Endlos-Zahnriemen ist und zwischen Antrieb (5) und einer Umlenkrolle (3) umläuft.

6. Öffnungssicherung nach einem der Ansprüche 1 bis 5, **dadurch gekennzeichnet, dass** der Antrieb (5) ein Motor ist.

7. Öffnungssicherung nach einem der Ansprüche 2 bis 6, **dadurch gekennzeichnet, dass** die Magnetkupplung (10) einer Antriebsrolle (19) des Motors (5) und/oder der Umlenkrolle (3) zugeordnet ist.

8. Öffnungssicherung nach einem der Ansprüche 2 bis 7, dadurch g kennzeichnet, dass die Magnetkupplung (10) einen Befestigungshalter (11) aufweist.
